# EUROPEAN PATENT SPECIFICATION

(11) **EP 3 260 883 B1**
(45) Date of publication and mention of the grant of the patent: **16.04.2025**
(21) Application number: 17177737.8
(22) Date of filing: 23.06.2017
(51) Int. Cl.: G01S 13/58, G01S 13/92, G08G 1/054, G08G 1/017, G01S 13/86

(54) **APPARATUS FOR DETECTING SPEEDING VEHICLES**
VORRICHTUNG ZUR DETEKTION VON ZU SCHNELL FAHRENDEN FAHRZEUGEN
APPAREIL DE DÉTECTION DE VÉHICULES EN EXCÈS DE VITESSE

(30) Priority: 24.06.2016 GB 201611074
(43) Date of publication of application: 27.12.2017
(73) Proprietor: AGD Systems Limited, Staverton Cheltenham Gloucestershire GL51 0TF (GB)
(72) Inventor: NELSON, Doug, Cheltenham, Gloucestershire GL51 0TF (GB); HUTCHINSON, Peter, Cheltenham, Gloucestershire GL51 0TF (GB)
(74) Representative: Barker Brettell LLP

(56) References cited:
- EP-A2- 0 347 090
- US-A1- 2002 186 148
- US-A1- 2013 069 816
- US-A1- 2015 332 563

## Description

This invention relates to apparatus for us in the detecting speeding vehicles.

The use of radar based devices to detect speeding vehicles is now well known. Fixed site devices, either providing a measure of instantaneous speed or working with other fixed devices to provide a measure of an average speed over a set distance, may be fixed at positons by the roadside. Where more flexibility is desired it is known to provide handheld portable devices which are sometimes referred to as speed guns. These may also use radar to detect the speed of the vehicles and are primarily used by the police to enforce speed limits on the public highway.

To date, portable speed measurement devices have been relatively expensive because of the need to calibrate the devices and also the need for a relatively high degree of operator training. This has prevented the widespread adoption of radar based devices by the public. There have been attempts to provide more consumer oriented speed detection devices although these have been limited in functionality. For instance a continuous wave (CW) radar to detect a speeding object within its field of view, such as a baseball. The device cannot however discriminate between multiple devices within the field of view as it cannot determine any information about the range of the object. The device is therefore unsuitable for use in detecting vehicle speeds where there may be multiple vehicles in view, as is common on the increasingly crowded public highways in many countries.

It is an object of the present invention to provide a low cost radar based apparatus for detecting speeding vehicles that is both relatively low cost and is simple and intuitive to use.

We are aware of the teachings of US2015/0332563A1 which discloses a wearable pedestrian safety radar system including a harness, a portable radar device and a display. The device detects the speed of oncoming vehicles and a camera captures images of the vehicle.

According to a first aspect the invention provides a portable speed detection and recording system as claimed in claim 1.

By providing a radar device that can be used with a portable electronic device to form a system in accordance with the invention, a low cost system is achieved primarily because most users will already have a suitable portable electronic device such as a smartphone or tablet. This is taken a step further by using the portable device as the user interface for setting the range at which the speed is captured by the radar device, eliminating in some cases the need to provide that user interface on the radar device itself. Further ease of use is achieved by the portable device automatically capturing the image when the trigger is received, so that the user merely has to point the device towards the approaching vehicles to capture speed and images. The radar device, by filtering out vehicles that are not in the set range or speed reduces the power consumed as there is no need to perform the calculations needed to determine speed or transmit information to the portable device.

The radar device measures distance to objects, e.g. vehicles, in a pulsed mode and whenever in range then determines the speed of the object. However it is preferable that the radar device in the first instance measures the speed of the vehicle and only if it is above a threshold speed will the radar device measure the distance to the object, a trigger being sent if the vehicle is in the defined range. This reduces power as it means range is only calculated for vehicles travelling at speeds above the threshold, since range detection inherently is more computationally intensive and hence more power hungry.

The radar device, in use, may apply a digital filter, such as a FIR filter, prior to the full Doppler range process to detect that a target vehicle speed is above the set threshold. When a speed is detected above the set threshold the radar device may then be configured to apply full range Doppler processing to the data to obtain range and Doppler data, i.e. range plus speed.

The digital filter allows a 'quick process' to give speed information only using the same source data that can be used for full range plus speed processing (i.e. no time/power overhead of capturing new data if a speeding target is initially found). The filter design may approximate a bandpass filter which reduces the signal bandwidth and hence noise, still allowing target speed data to pass with reasonable amplitude for all ranges. This quick look method saves considerable processing overhead (power consumption) should no targets be present.

The radar device may include a memory in which the range information received in the control signal, or indicated by the value of the control signal is stored. This may be updated whenever a new control signal is received which has updated values. The control signal may therefore only be sent at times when the user wants to change the range. At all other times, the range information used to determine if a vehicle is in range will be extracted from the memory by the processing unit.

The trigger signal sent to the portable device may comprise a measurement of speed and the device may take a picture whenever the speed indicated by the trigger signal exceeds a preset or user defined value. The trigger signal may therefore comprise a numerical value which is indicative of the speed.

The trigger signal may be sent at defined intervals of time for as long as a vehicle is detected, for instance every 1/10^{th} of a second. Each value sent may be indicative of the instantaneous speed of the vehicle when the vehicle is detected. In this case, the camera may capture an image each time a trigger signal is received.

Sending the speed of all vehicles in range as the trigger signal, or all vehicles in range and above the speed threshold, enables a live view of the speed to be presented on a screen of the portable device.

The trigger signal is only sent to the portable device when the speed of the vehicle exceeds a preset or user defined value. This reduces the power consumption of the device. The speed may be displayed on a screen of the device when it is received.

The speed threshold may be stored in a memory of the radar device where it is accessed by the processing means when in use.

The radar device may be arranged to receive a further control signal that encodes the speed threshold and in response to receiving this signal may set the minimum threshold speed used by the radar device. This control signal may be combined with the control signal that sets the range.

The trigger signal may be sent to the portable device only once, corresponding to the first instance at which a vehicle is detected in the defined range and exceeds the predefined minimum speed. This further reduces the power consumed, with the minor disadvantage that the speed transmitted may not correspond to the highest speed for the detected vehicle in the defined range. In most instances where the range of distances is narrow, say 30m or less, this is not a significant drawback as the vehicle is unlikely to be increase significantly over such as small distance.

The radar device may be configured to transmit to the portable device a synchronization signal indicative of the settings of the radar device, i.e. the range and speed thresholds. This signal may be transmitted when the radar device is first connected to the a portable device, for instance during a set up or pairing process determined by the communication protocol used to transmit signals from the radar device to the portable device. This synchronization signal may include, for instance, the MAC address of the portable device for connection across a Wi-Fi network, or a BD_ADDR for connection using Bluetooth.

The portable device may include a screen on which images captured by the camera are displayed. This may be a continuous stream of captured images depending on the camera image capture rate, and may lag a little behind real time due to that capture time. Portable devices, such as smart phones, today nearly all have suitable cameras and screens that can be used to display the captured scene.

The radar device may include in a memory a default range of distances and optionally a default predefined minimum speed which determines when a trigger signal is to be produced. This allows the apparatus to function even when a user has not sent any control signal to the device, for instance on initial purchase.

The control signals that may be sent from the portable device to the radar device may be indicative of at least one of an identity of the portable electronic device or an identity of the camera for determining camera settings, or the camera settings themselves.

The portable electronic device may be configured to communicate with a database, the database including information about the portable electronic device and/or optimized camera settings.

The control signals sent to the radar device to set the range may be selected so as to configure the radar device to send the trigger signal when the target vehicle is at an optimum range for image size and quality of the camera, as determined by the camera settings.

In an alternative the portable electronic device may instead set the focal length and zoom of the camera automatically from the range information it sends to the radar device.

The camera settings may be manually controllable by a user, the control signals provided to the radar device being at least partially derived from these camera settings.

The camera settings may be manually controllable via a user operable interface of the portable electronic device.

The camera settings may include one or more of the focal length, field of view, zoom, or f-number.

The portable electronic device may include location determining means for detecting the location at which the image is captured.

The portable electronic device may be configured to time stamp each image.

The data may be stored as image metadata. Optionally, this data may be used to produce a composite image of the image and the data.

The portable electronic device includes firmware that captures the images from the camera and processes the trigger signal and data transmitted from the radar device, and software in the form of an app that controls both the settings of the camera and radar device.

The software may automatically optimize the image of a target vehicle detected by the radar device. The portable electronic device app may be operable in use to enable the user to setup the radar detector trigger settings such as the speed, range threshold and target direction of travel using the portable device app.

The radar device preferably communicates with the portable electronic device over a wireless communication means. For example, the wireless communication means may be one of Bluetooth^{®}, Bluetooth^{®} LE, Wi-Fi, NFC or ANT+. However, it is within the scope of the invention in at least one arrangement that the radar device communicates with the portable electronic device using a hard wired connection.

The radar device may comprise a housing with a single power button, the housing otherwise being devoid of any user operable interface, the control and user interaction being performed using the portable electronic device. It may be a small, pocket sized housing that can fit within the hand of a user.

The system includes a mount for physically securing the radar device to the portable electronic device.

The FMCW radar is pulsed to reduce power.

The radar device may in use, be configured to apply an FIR filter followed by Doppler process to detect that a target vehicle is present within the range of target speeds but not detect the range, and when a target vehicle is present in the speed range, the radar device is configured to apply full range Doppler processing to the data to obtain range and Doppler speed data.

The device may include wireless communication means for receiving the control signal from the portable electronic device and transmitting the trigger signal to the portable device.

The radar device may comprise a housing with a single power button, the housing otherwise being devoid of any user operable interface.

The radar device may comprise a mount for mounting the radar device to a portable electronic device.

The radar device may be small enough to fit in the hand, and may for instance by comparable in size to a mobile phone.

The radar may be powered from a battery such as a single 3.6V AA battery. To reduce power consumption, the radar and processing circuit of the radar device is configured to be powered up to take measurements for only a fraction of each frame period. For instance, the radar may be configured to be powered up for 10ms in every 100ms frame period.

The device may include a memory which stores the minimum and maximum ranges for a trigger signal, and also stores a threshold speed below which a vehicle does not generate a trigger signal when detected.

The control signals may be indicative of at least one of an identity of the portable electronic device or an identity of the camera for determining camera settings, or the camera settings themselves.

The method may further comprise the step of the portable electronic device communicating with a database to obtain information about the portable electronic device and/or optimized camera settings.

The method may further comprise the step of determining the location of the portable electronic device and storing this information with the image.

The method may further comprise the step of automatically optimizing the image of a target vehicle.

The method may further comprise the step of applying an FIR filter followed by Doppler process to detect that a target vehicle is present.

When a target vehicle is present, the method may include the step of applying full range Doppler processing to the data to obtain range and Doppler (speed) data.

There will now be described, by way of example only, one embodiment of the present invention with reference to the accompanying drawings of which:
**Figure** 1 is a side view of a portable speed detection apparatus that falls within the first aspect of the invention;
**Figure** 2 is a perspective view of the apparatus of figure 1;
**Figure** 3 shows the shows the field of view of the camera and radar detector which overlap when the device is held in use;
**Figure** 4 is a block diagram of the key parts of the radar device; and
**Figures 5 to** 13 are exemplary views of the user interface presented on the screen of the portable device when in use.

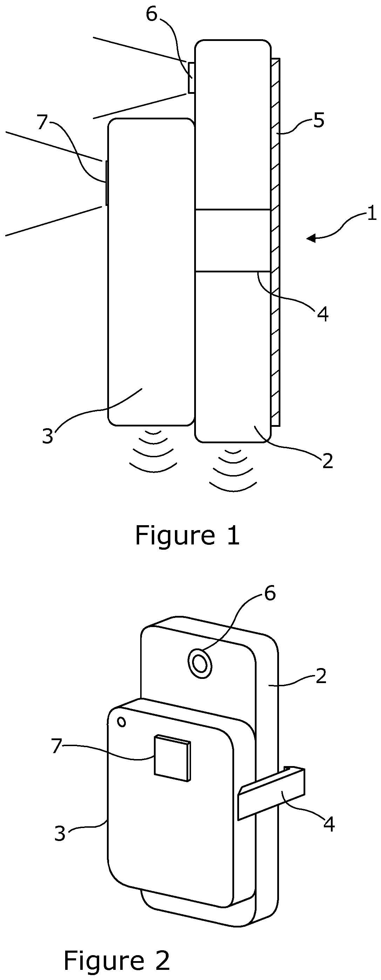

As shown in Figures 1 and 2, a portable speed detection and recording system 1 for detecting speeding vehicles comprises in combination a portable electronic device 2 having a camera and a separate portable radar device 3 having a radar antenna 7. The two devices 2, 3 may be secured together using a clip 4 fixed to the housing of the radar device that fits around the side edges of the portable electronic device.

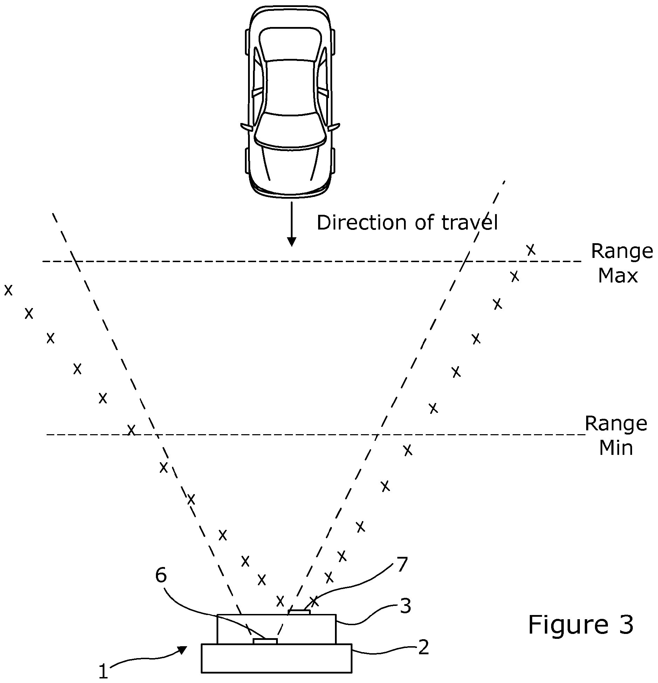

In this example the portable electronic device 2 comprises a smartphone having a screen 5 on a front face, and a camera 6 on the rear face. The camera 6 could be on the same face as the screen. When it is on the rear face, as shown, it is important that the radar device 3 when secured to the smartphone does not obscure the scene viewed by the camera 6. Also, the antenna 7 of the radar detector 3 when fixed should have a field of view for detecting vehicles that corresponds, or at least overlaps, with the field of view of the camera. Figure 3 shows the field of view of the camera 6, the edges of which are denoted by dashed lines and the field of view of the antenna 7, the edges of which are denoted by a line of crosses, when in a typical usage mode to observe vehicles on a highway.

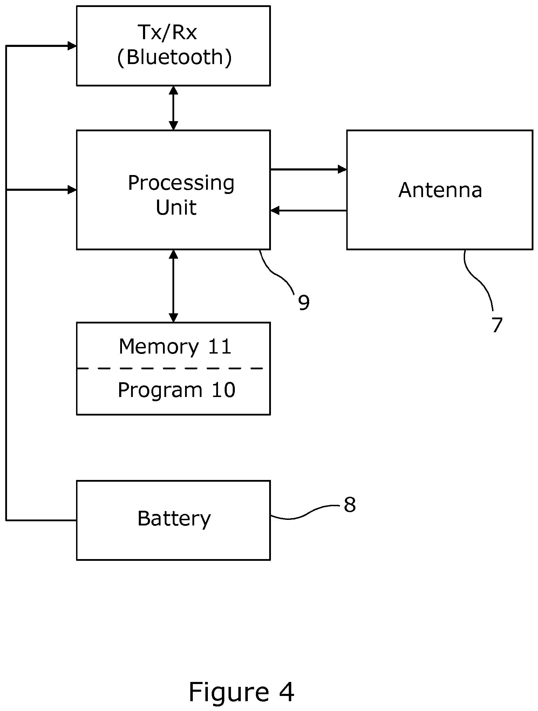

The key parts of a smartphone are well known and so will not be described here in any detail. The invention requires a smartphone to have a camera and a wireless or wired connection to the radar device. Figure 4 is a block diagram showing the key parts of the radar device. It comprises a small housing which contains a battery 8 and a battery powered, pulsed, frequency modulated continuous wave (FMCW) radar, in this example consuming a very low power from a single built in 3.6 volt AA cell battery. The radar comprises an antenna 7 and a processing unit 9 that provides drive signals to the antenna and analyses the signals detected by the antenna. The processing unit 9 runs a set of program instructions 10 stored in a memory 11 of the device.

The radar device includes a radio frequency receiver/transmitter 12 for receiving control signals from the portable electronic device and for transmitting trigger signals to the portable electronic device 3. The control signals in this example encode a range of distances within which a vehicle is to be detected, and a minimum speed above which a vehicle must be travelling for the radar device to trigger a chain of events leading to smartphone capturing an image of a speeding vehicle. The control signal may also encode a direction of travel for targets that the device is to detect, allowing the device to selectively detect targets moving towards, or from, or both towards and from the device. The control signals may take many forms, and may include actual range values (for instance 30m or 30KPH) although the range could be encoded in numerous different ways so long as the radar device can interpret the encoding.

Figure 3 shows exemplary upper and lower range boundaries as dotted lines, defining a zone within which a trigger may be generated and outside of which the trigger signal is not generated or is suppressed.

The processing means of the radar device 3 in use determines the speed of a vehicle that is detected by the radar antenna 7 and that is within the range of distances, and if this is above a threshold set in the device this speed measurement is sent to the portable electronic device as a trigger signal.

The memory 11 of the radar device stores the range information and speed threshold information. The device 3 may initially ship with a preset range, and can be modified on receipt of control signals from the smartphone. The memory 11 also includes a speed threshold, below which detected vehicles are ignored.

The smartphone 2 also includes a receiver and transmitter, for transmitting the control signals to the radar device and receiving the trigger signal. The transmitted signals are generated by a computer program- a software "app" that is run on the smartphone. The app, when running, guides the user through a process to pair the smartphone to the radar device, in this example using a Bluetooth protocol.

All the user needs to do, when in use, is hold the camera so that a portion of highway where vehicles are to be detected is in the field of view of the camera, activate the app, and turn on the radar device. The app optimizes the camera settings to ensure that a vehicle in the target range of the radar device will be in focus and at a suitable zoom level, for instance to enable the number plate of the vehicle to be clearly identified in a captured image. The app communicates with the radar device to set up the device to capture vehicle data in a range of interest as set by the user.

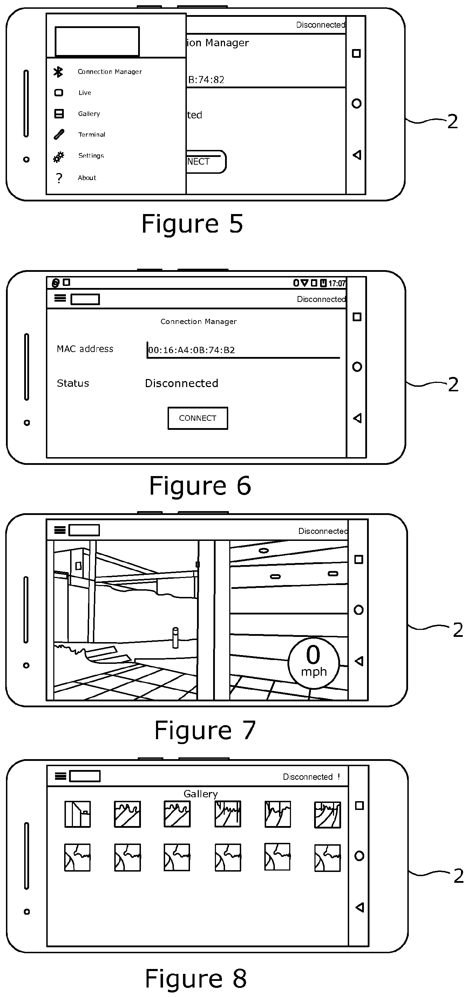

It has a simple user interface for the user to configure the detector trigger settings. An example interface, presented on the screen of the smartphone is shown in Figures 5 to 13 of the drawings.

The user interface of the app in this example provides the following features:
1. User can setup the FMCW detector trigger settings such as the speed and range thresholds using the mobile app. Once set these are sent to the radar device encoded within the control signal. The connection is via Bluetooth.
2. It adds a live overlay of speed information from the FMCW detector on top of the camera stream.
3. It captures an image automatically from the stream of images when the trigger conditions are satisfied, i.e. when a trigger signal is received. The captured image is overlaid with the incident time and the speed information extracted from the trigger signal.
4. It has a gallery suite to manage the captured images which are presented in thumbnails. Also, this has an option to email individual image as an attachment to a predefined email address.
5. It has a terminal viewer to send and receive the FMCW detector commands and responses respectively.

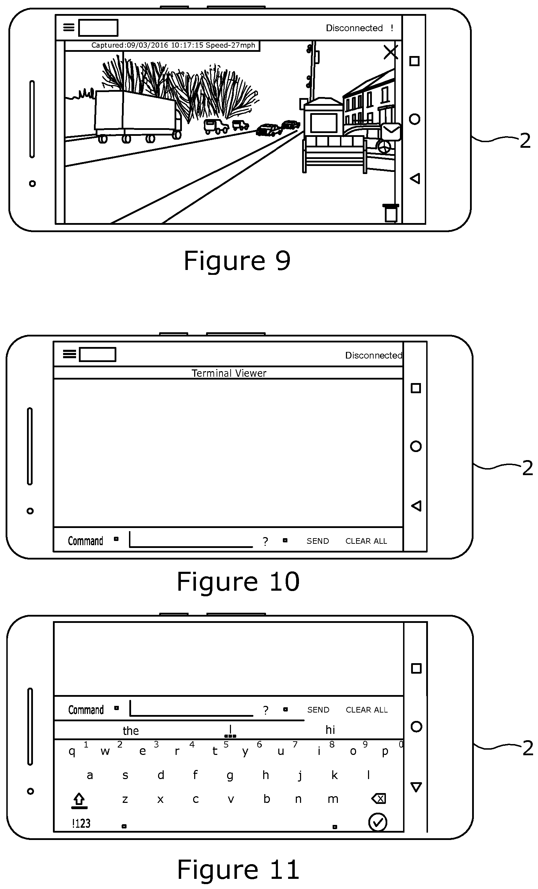

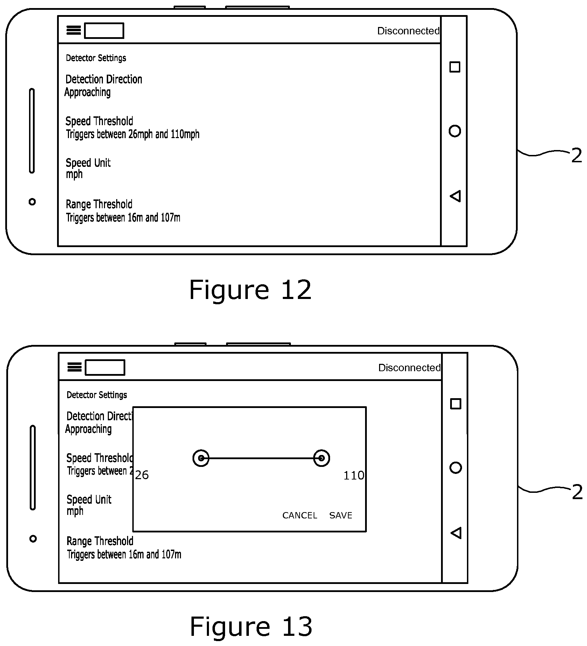

An exemplary operation of the smartphone app may be as follows.
1. The main menu of the application is shown in figure 5. This helps the user to switch between various pages.
2. The connection manager manages the Bluetooth connection as shown in figure 6. The user should enter the MAC address of the FMCW detector to establish a connection and the app remembers the last known MAC address. The user may get a PIN entry dialog briefly, but the app enters the PIN in the background and closes the dialog. On successful connection, the app switches to the Live view page as shown in figure 7.
3. Figure 7 shows the live view page. This page shows the rear camera stream and the live speed from the FMCW detector. The speedometer can be dragged and placed wherever is convenient for the user. If the connection fails, the app switches to the connection manager page.
4. The gallery page is shown in figure 8 which displays all the captured images in a grid style. Each image opens up in full screen with email/delete options as shown in figure 9. On the full screen mode, the user can swipe left/right to navigate between previous and next images.
5. Terminal viewer is useful to send/receive the command/response to the FMCW RADAR as shown in figure 10. When the user taps the command entry box, the full keyboard appears as shown in figure 11. The shortcuts keys (*,?,=) are made available near the command entry box to simply the operation.
6. Settings page shows the FMCW detector properties and automatically reads from the radar detector on a successful connection as shown in figure 12. The changes to the properties are sent to the detector, as the encoded control signal, when the user selects save as shown in figure 13.

When a vehicle enters the field of view of the radar, the processing means applies a FIR filter and a Doppler process to determine the speed of the vehicle, and only if this is above a set threshold will a full Doppler process be applied to start to measure the vehicle range. If this is within the threshold set within the radar device a trigger signal will be sent to smartphone encoding the speed. When this is received the app causes the camera to capture an image of the scene. This is then saved in a memory on the smartphone together with the speed of the vehicle from the trigger signal. This speed, and other optional information such as the time of day and location may be overlaid onto the captured image when it is stored by the app. Location data may be determined if the smartphone is provided with a GPS position sensor or similar means for determining the location of the smartphone.

## Claims

1. A portable speed detection and recording system (1) for detecting speeding vehicles, comprising in combination a portable electronic device (2) having a camera (6) and a separate portable radar device (3), in which the radar device comprises:
a battery powered, frequency modulated continuous wave FMCW radar, that is repeatedly powered up and powered down in a series of pulses, whereby when powered up the radar operates as an FMCW radar to take measurements, a receiver for receiving a control signal from the portable electronic device that is indicative of a range of distances within which the radar device, in use, is to output a trigger signal indicating the detection of a moving target vehicle and outside of which the radar device does not output a trigger signal, a processing means for determining from the radar the speed of a vehicle that is detected by the radar only when that vehicle is within the said range of distances as determined by the radar, the radar not determining the speed of targets outside of that range, the radar device further including a transmitter for sending to the portable electronic device a trigger signal that encodes at least the speed of the target vehicle,
and in which the portable electronic device is configured to capture an image of the target with the camera in response to receiving the trigger signal from the radar device and to store the image together with the data representing the speed of the target vehicle, and in which the trigger signal is sent to the portable device only when the speed of the vehicle determined by the radar exceeds a preset or user defined value.

2. A portable speed detection and recording system as claimed in claim 1, wherein the radar device includes a memory in which the range information is stored, the information being updated when a control signal is received which contains different range information, and wherein the portable electronic device is configured to communicate with a database, the database including information about the portable electronic device and/or optimized camera settings.

3. A portable speed detection and recording system as claimed in claim 2, wherein the control signals sent to the radar device to set the range will configure the radar device to send the trigger signal when the target vehicle is at an optimum range for image size and quality of the camera, as determined by the camera settings or alternatively in which the portable device is configured to automatically set the focal length and zoom of the camera automatically from the range information sent to the radar device in the control signal.

4. A portable speed detection and recording system as claimed in claim 2 to 3, wherein the camera settings are manually controllable by a user, the control signals being at least partially derived from these camera settings.

5. A portable speed detection and recording system as claimed in any of claims 2 to 4, wherein the camera settings are manually controllable via a user operable interface of the portable electronic device.

6. A portable speed detection and recording system as claimed in any of claims 2 to 5, wherein the camera settings include one or more of the focal length, field of view, zoom, or f-number.

7. A portable speed detection and recording system as claimed in any of the preceding claims, wherein the portable electronic device is configured to time stamp each image.

8. A portable speed detection and recording system as claimed in any of the preceding claims, wherein the data is used to produce a composite image of the image and the data.

9. A portable speed detection and recording system as claimed in any of the preceding claims, wherein the portable electronic device includes firmware that captures the images from the camera and processes the trigger signal and data transmitted from the radar device, and software in the form of an app that controls both the settings of the camera and radar.

10. A portable speed detection and recording system as claimed in any of the preceding claims, wherein the radar device, in use, applies an FIR filter followed by Doppler process to detect that a target vehicle is present and wherein, when a target vehicle is present, the radar device is configured to apply full range Doppler processing to the data to obtain range and Doppler data.

11. A portable speed detection and recording system as claimed in any of the preceding claims, wherein the radar device is configured to only send the trigger signal when the target vehicle is travelling above a predetermined speed.

12. A portable speed detection and recording system as claimed in any of the preceding claims, wherein the radar device communicates with the portable electronic device over a wireless communication means.

13. A portable speed detection and recording system as claimed in any of the preceding claims, wherein the radar device comprises a housing with a single power button, the housing otherwise being devoid of any user operable interface, the control and user interaction being performed using the portable electronic device.

## Patentansprüche

1. Tragbares Geschwindigkeitserfassungs- und -aufzeichnungssystem (1) zum Erfassen von zu schnell fahrenden Fahrzeugen, umfassend in Kombination eine tragbare elektronische Vorrichtung (2), die eine Kamera (6) aufweist, und eine separate tragbare Radarvorrichtung (3), wobei die Radarvorrichtung umfasst:
ein batteriebetriebenes, frequenzmoduliertes Dauerstrichradar, FMCW-Radar, das in einer Reihe von Impulsen wiederholt ein- und ausgeschaltet wird, wobei das Radar, wenn es eingeschaltet ist, als ein FMCW-Radar in Betrieb ist, um Messungen vorzunehmen, einen Empfänger zum Empfangen eines Steuersignals von der tragbaren elektronischen Vorrichtung, das einen Entfernungsbereich angibt, innerhalb dessen die Radarvorrichtung in Verwendung ein Auslösesignal ausgeben soll, das die Erfassung eines sich bewegenden Zielfahrzeugs angibt, und außerhalb dessen die Radarvorrichtung kein Auslösesignal ausgibt, ein Verarbeitungsmittel zum Bestimmen der Geschwindigkeit eines Fahrzeugs von dem Radar, das durch das Radar nur dann erfasst wird, wenn sich das Fahrzeug innerhalb des durch das Radar bestimmten Entfernungsbereichs befindet, wobei das Radar die Geschwindigkeit von Zielen außerhalb dieses Bereichs nicht bestimmt, wobei die Radarvorrichtung ferner eine Übertragungseinrichtung zum Senden eines Auslösesignals an die tragbare elektronische Vorrichtung einschließt, das mindestens die Geschwindigkeit des Zielfahrzeugs codiert,
und wobei die tragbare elektronische Vorrichtung konfiguriert ist, um als Reaktion auf das Empfangen des Auslösesignals von der Radarvorrichtung mit der Kamera ein Bild des Ziels aufzunehmen und das Bild zusammen mit den Daten zu speichern, die die Geschwindigkeit des Zielfahrzeugs darstellen, und wobei das Auslösesignal nur dann an die tragbare Vorrichtung gesendet wird, wenn die durch das Radar bestimmte Geschwindigkeit des Fahrzeugs einen voreingestellten oder benutzerdefinierten Wert überschreitet.

2. Tragbares Geschwindigkeitserfassungs- und -aufzeichnungssystem nach Anspruch 1, wobei die Radarvorrichtung einen Speicher einschließt, in dem die Reichweiteninformationen gespeichert sind, wobei die Informationen aktualisiert werden, wenn ein Steuersignal empfangen wird, das unterschiedliche Reichweiteninformationen enthält, und wobei die tragbare elektronische Vorrichtung konfiguriert ist, um mit einer Datenbank zu kommunizieren, wobei die Datenbank Informationen über die tragbare elektronische Vorrichtung und/oder optimierte Kameraeinstellungen einschließt.

3. Tragbares Geschwindigkeitserfassungs- und -aufzeichnungssystem nach Anspruch 2, wobei die an die Radarvorrichtung gesendeten Steuersignale, um die Reichweite einzustellen, die Radarvorrichtung konfigurieren, um das Auslösesignal zu senden, wenn sich das Zielfahrzeug in einer optimalen Reichweite hinsichtlich Bildgröße und -qualität der Kamera befindet, wie durch die Kameraeinstellungen bestimmt, oder wobei die tragbare Vorrichtung alternativ konfiguriert ist, um die Brennweite und den Zoom der Kamera automatisch anhand der in dem Steuersignal an die Radarvorrichtung gesendeten Reichweiteninformationen automatisch einzustellen.

4. Tragbares Geschwindigkeitserfassungs- und -aufzeichnungssystem nach Anspruch 2 bis 3, wobei die Kameraeinstellungen durch einen Benutzer manuell steuerbar sind, wobei die Steuersignale mindestens teilweise von diesen Kameraeinstellungen abgeleitet werden.

5. Tragbares Geschwindigkeitserfassungs- und -aufzeichnungssystem nach einem der Ansprüche 2 bis 4, wobei die Kameraeinstellungen über eine benutzerbedienbare Schnittstelle der tragbaren elektronischen Vorrichtung manuell steuerbar sind.

6. Tragbares Geschwindigkeitserfassungs- und -aufzeichnungssystem nach einem der Ansprüche 2 bis 5, wobei die Kameraeinstellungen eine oder mehrere einschließen von Brennweite, Sichtfeld, Zoom oder Blendenzahl.

7. Tragbares Geschwindigkeitserfassungs- und -aufzeichnungssystem nach einem der vorstehenden Ansprüche, wobei die tragbare elektronische Vorrichtung konfiguriert ist, um jedes Bild mit einem Zeitstempel zu versehen.

8. Tragbares Geschwindigkeitserfassungs- und -aufzeichnungssystem nach einem der vorstehenden Ansprüche, wobei die Daten verwendet werden, um ein zusammengesetztes Bild aus dem Bild und den Daten zu produzieren.

9. Tragbares Geschwindigkeitserfassungs- und -aufzeichnungssystem nach einem der vorstehenden Ansprüche, wobei die tragbare elektronische Vorrichtung Firmware, die die Bilder von der Kamera aufnimmt und das Auslösesignal und die von der Radarvorrichtung übertragenen Daten verarbeitet, und Software in der Form einer App einschließt, die sowohl die Einstellungen der Kamera als auch des Radars steuert.

10. Tragbares Geschwindigkeitserfassungs- und -aufzeichnungssystem nach einem der vorstehenden Ansprüche, wobei die Radarvorrichtung in Verwendung einen FIR-Filter gefolgt von einem Doppler-Prozess anwendet, um zu erfassen, dass ein Zielfahrzeug anwesend ist, und wobei, wenn ein Zielfahrzeug anwesend ist, die Radarvorrichtung konfiguriert ist, um eine Doppler-Verarbeitung über die gesamte Reichweite auf die Daten anzuwenden, um Reichweite- und Doppler-Daten zu erhalten.

11. Tragbares Geschwindigkeitserfassungs- und -aufzeichnungssystem nach einem der vorstehenden Ansprüche, wobei die Radarvorrichtung konfiguriert ist, um das Auslösesignal nur dann zu senden, wenn das Zielfahrzeug eine zuvor bestimmte Geschwindigkeit überschreitet.

12. Tragbares Geschwindigkeitserfassungs- und -aufzeichnungssystem nach einem der vorstehenden Ansprüche, wobei die Radarvorrichtung über ein Drahtloskommunikationsmittel mit der tragbaren elektronischen Vorrichtung kommuniziert.

13. Tragbares Geschwindigkeitserfassungs- und -aufzeichnungssystem nach einem der vorstehenden Ansprüche, wobei die Radarvorrichtung ein Gehäuse mit einem einzigen Einschaltknopf umfasst, wobei das Gehäuse ansonsten keine benutzerbedienbare Schnittstelle aufweist, wobei die Steuerung und Benutzerinteraktion unter Verwendung der tragbaren elektronischen Vorrichtung durchgeführt wird.

## Revendications

1. Système portable de détection et d'enregistrement de vitesse (1) destinée à détecter des véhicules en excès de vitesse, comprenant en combinaison un dispositif électronique portable (2) ayant une caméra (6) et un dispositif radar (3) portable séparé, dans lequel le dispositif radar comprend :
un radar à ondes entretenues à modulation de fréquence FMCW alimenté par batterie, qui est mis sous tension et hors tension de manière répétée par une série d'impulsions, selon lequel, lorsqu'il est mis sous tension, le radar fonctionne comme un radar FMCW pour prendre des mesures, un récepteur destiné à recevoir un signal de commande à partir du dispositif électronique portable qui est indicatif d'une plage de distances à l'intérieur de laquelle le dispositif radar, en utilisation, doit délivrer en sortie un signal de déclenchement indiquant la détection d'un véhicule cible en mouvement et hors de laquelle le dispositif radar ne délivre pas en sortie de signal de déclenchement, un moyen de traitement destiné à déterminer, à partir du radar, la vitesse d'un véhicule qui est détecté par le radar uniquement lorsque ce véhicule se trouve à l'intérieur de ladite plage de distances déterminée par le radar, le radar ne déterminant pas la vitesse de cibles hors de cette plage, le dispositif radar comportant en outre un émetteur destiné à envoyer au dispositif électronique portable un signal de déclenchement qui encode au moins la vitesse du véhicule cible,
et dans lequel le dispositif électronique portable est configuré pour capturer une image de la cible avec la caméra en réponse à la réception du signal de déclenchement à partir du dispositif radar et pour stocker l'image ensemble avec les données représentant la vitesse du véhicule cible, et dans lequel le signal de déclenchement est envoyé au dispositif portable uniquement lorsque la vitesse du véhicule déterminée par le radar dépasse une valeur prédéfinie ou définie par l'utilisateur.

2. Système portable de détection et d'enregistrement de vitesse selon la revendication 1, dans lequel le dispositif radar comporte une mémoire dans laquelle les informations de plage sont stockées, les informations étant mises à jour lorsqu'un signal de commande est reçu qui contient des informations de plage différentes, et dans lequel le dispositif électronique portable est configuré pour communiquer avec une base de données, la base de données comportant des informations sur le dispositif électronique portable et/ou des réglages de caméra optimisés.

3. Système portable de détection et d'enregistrement de vitesse selon la revendication 2, dans lequel les signaux de commande envoyés au dispositif radar afin de régler la plage configureront le dispositif radar pour envoyer le signal de déclenchement lorsque le véhicule cible se trouve dans une plage optimale pour la taille et la qualité d'image de la caméra, telles que déterminées par les réglages de caméra, ou alternativement, dans lequel le dispositif portable est configuré pour régler automatiquement la distance focale et le zoom de la caméra automatiquement à partir des informations de plage envoyées au dispositif radar dans le signal de commande.

4. Système portable de détection et d'enregistrement de vitesse selon la revendication 2 à 3, dans lequel les réglages de caméra peuvent être commandés manuellement par un utilisateur, les signaux de commande étant au moins partiellement dérivés de ces réglages de caméra.

5. Système portable de détection et d'enregistrement de vitesse selon l'une quelconque des revendications 2 à 4, dans lequel les réglages de caméra peuvent être commandés manuellement par l'intermédiaire d'une interface exploitable par l'utilisateur du dispositif électronique portable.

6. Système portable de détection et d'enregistrement de vitesse selon l'une quelconque des revendications 2 à 5, dans lequel les réglages de caméra comportent l'un ou plusieurs parmi la distance focale, le champ de vision, le zoom, ou le numéro d'ouverture.

7. Système portable de détection et d'enregistrement de vitesse selon l'une quelconque des revendications précédentes, dans lequel le dispositif électronique portable est configuré pour horodater chaque image.

8. Système portable de détection et d'enregistrement de vitesse selon l'une quelconque des revendications précédentes, dans lequel les données sont utilisées pour produire une image composite de l'image et des données.

9. Système portable de détection et d'enregistrement de vitesse selon l'une quelconque des revendications précédentes, dans lequel le dispositif électronique portable comporte un micrologiciel qui capture les images de la caméra et traite le signal de déclenchement et les données transmises à partir du dispositif radar, et un logiciel sous la forme d'une application qui commande à la fois les réglages de la caméra et du radar.

10. Système portable de détection et d'enregistrement de vitesse selon l'une quelconque des revendications précédentes, dans lequel le dispositif radar, en utilisation, applique un filtre **FIR** suivi d'un traitement Doppler afin de détecter qu'un véhicule cible est présent et dans lequel, lorsqu'un véhicule cible est présent, le dispositif radar est configuré pour appliquer un traitement Doppler complet aux données afin d'obtenir des données de plage et des données Doppler.

11. Système portable de détection et d'enregistrement de vitesse selon l'une quelconque des revendications précédentes, dans lequel le dispositif radar est configuré pour envoyer le signal de déclenchement uniquement lorsque le véhicule cible circule au-dessus d'une vitesse prédéterminée.

12. Système portable de détection et d'enregistrement de vitesse selon l'une quelconque des revendications précédentes, dans lequel le dispositif radar communique avec le dispositif électronique portable par le biais d'un moyen de communication sans fil.

13. Système portable de détection et d'enregistrement de vitesse selon l'une quelconque des revendications précédentes, dans lequel le dispositif radar comprend un boîtier avec un seul bouton d'alimentation, le boîtier étant par ailleurs dépourvu de toute interface exploitable par l'utilisateur, la commande et l'interaction avec l'utilisateur étant effectuées à l'aide du dispositif électronique portable.
